# EUROPÄISCHE PATENTANMELDUNG

(11) **EP 2 192 004 A1**
(43) Veröffentlichungstag der Anmeldung: **02.06.2010**
(21) Anmeldenummer: 09010894.5
(22) Anmeldetag: 26.08.2009
(51) Int. Cl.: B60Q 3/00, B60Q 3/02, B60K 28/06, G08B 21/06, B60W 40/08

(54) **Verfahren und Vorrichtung zur Signalübertragung in einen Fahrzeuginnenraum**

(30) Priorität: 27.11.2008 DE 102008059418
(71) Anmelder: MAN Nutzfahrzeuge AG, 80995 München (DE)
(72) Erfinder: Schwertberger, Walter, 82278 Althegnenberg (DE); Heyes, Daniel, 81247 München (DE); Brummer, Markus, 85301 Schweitenkirchen (DE); Resch, Christoph, 80637 München (DE)

(57) **Zusammenfassung**

Die vorliegende Erfindung betrifft eine Vorrichtung (2) zur Signalübertragung in einen Fahrzeuginnenraum (3), insbesondere eines Nutzfahrzeuges (1), mit wenigstens einer in dem Fahrzeuginnenraum (1) angeordneten Lichtquelle (5), die steuerungstechnisch mit einer Steuerungsvorrichtung (13) verbunden ist. Die Vorrichtung (2) zeichnet sich dadurch aus, dass die Lichtquelle (13) zur ambienten Beleuchtung ausgebildet ist, wobei die Steuerungseinrichtung (13) zur Überwachung mindestens einer Art eines Fahrzustandes eingerichtet und mit wenigstens einem Sensormittel (11) verbunden ist, welches ein Sensorsignal (12) erzeugt und die Lichtquelle in Abhängigkeit von dem Sensorsignal (12) steuert.

## Beschreibung

Die vorliegende Erfindung betrifft eine Vorrichtung zur Signalübertragung in einen Fahrzeuginnenraum, insbesondere eines Nutzfahrzeugs, mit wenigstens einer in dem Fahrzeuginnenraum angeordneten Lichtquelle, die steuerungstechnisch mit einer Steuerungsvorrichtung verbunden ist. Darüber hinaus betrifft die vorliegende Erfindung ein Verfahren zur Bereitstellung wenigstens eines Signals in einem Fahrzeuginnenraum. Die Erfindung findet insbesondere Anwendung im Automobil- und Nutzfahrzeugbereich.

Zur Verbesserung der Fahrsicherheit sind im Stand der Technik Systeme bekannt, um bei Gefahrensituationen Warnhinweise an einen Fahrer auszugeben und dessen Aufmerksamkeit zu auf die Gefahr zu lenken. So sind beispielsweise Systeme zur Erkennung von Müdigkeitszuständen bei Fahrern bekannt, die, sobald ein Ermüdungszustand festgestellt wird, Fahrzeugteile, wie etwa das Lenkrad oder den Fahrzeugsitz in Vibration versetzen.

Während derartige Systeme bereits Verbesserungen gegenüber Fahrzeugen ohne derartige Warneinrichtungen aufweisen, hat es sich herausgestellt, dass aufgrund von auftretenden Fehlalarmen bei bekannten Systemen die Akzeptanz der Benutzer nicht in dem gewünschten Maß gegeben ist. Vielmehr werden regelmäßig Sicherheitssysteme aufgrund von gehäuften Fehlalarmen bewusst stillgelegt, wodurch jegliche Verbesserung der Sicherheit hinfällig wird.

Aufgabe der vorliegenden Erfindung ist es somit, die sich aus dem Stand der Technik ergebenden Probleme zumindest teilweise zu lösen und insbesondere ein Verfahren sowie eine Vorrichtung zur Bereitstellung von Signalen in einem Fahrzeuginnenraum zu schaffen, die eine verbesserte Zuverlässigkeit und eine höhere Akzeptanz bei Benutzern aufweisen.

Diese Aufgaben werden mit einer Vorrichtung gemäß den Merkmalen des Patentanspruchs 1 sowie mit einem Verfahren gemäß den Merkmalen des Patentanspruchs 8 gelöst. Weitere vorteilhafte Ausgestaltungen der Erfindung sind in den abhängig formulierten Ansprüchen angegeben. Es ist darauf hinzuweisen, dass die in den abhängig formulierten Patentansprüchen einzeln aufgeführten Merkmale in beliebiger technologisch sinnvoller Weise miteinander kombiniert werden können und weitere Ausgestaltungen der Erfindung definieren. Darüber hinaus werden die in den Patentsprüchen angegebenen Merkmale der Beschreibung näher präzisiert und erläutert, wobei weitere bevorzugte Ausführungsbeispiele der Erfindung dargestellt werden.

Vorliegend wird die Aufgabenstellung durch eine Vorrichtung zu Signalübertragung in einen Fahrzeuginnenraum, insbesondere den Fahrzeuginnenraum eines Nutzfahrzeuges, mit wenigstens einer in dem Fahrzeuginnenraum angeordneten Lichtquelle gelöst, die steuerungstechnisch mit einer Steuerungsvorrichtung verbunden ist. Die erfindungsgemäße Vorrichtung zeichnet sich dadurch aus, dass die Lichtquelle zur ambienten Beleuchtung ausgebildet ist, wobei die Steuerungseinrichtung zur Überwachung mindestens eine Art eines Fahrzustandes eingerichtet und mit wenigstens einem Sensormittel verbunden ist, welches ein Sensorsignal erzeugt und die Lichtquelle in Abhängigkeit von dem Sensorsignal steuert.

Als Fahrzeuginnenraum im Sinne der Erfindung sind die Räumlichkeiten eines Fahrzeuges anzusehen, in denen sich ein Fahrer und gegebenenfalls weitere Passagiere während der Fahrt befinden. In dem Fahrzeuginnenraum sind Lichtquellen zur ambienten Beleuchtung angeordnet, die sich dadurch auszeichnen, dass sie den Innenraum auch in solchen Abschnitten beleuchten, die von der Instrumentenbeleuchtung und der Beleuchtung einzelner Bedienelemente, wie beispielsweise der Beleuchtung eines Kombiinstrumentes oder eines Zigarettenanzünders, nicht ausgeleuchtet werden.

Gemäß der vorliegenden Erfindung ist nun die Lichtquelle zur ambienten Beleuchtung mit einer Steuerungseinrichtung verbunden, die dazu geeignet ist, das von der Lichtquelle abgegebene Licht in unterschiedlicher Weise zu beeinflussen. Gleichzeitig ist die Steuerungseinrichtung dazu geeignet wenigstens ein Sensorsignal von einem Sensormittel zu erfassen, auszuwerten und in Abhängigkeit von der Auswertung die Lichtquelle zu steuern. Hierbei wird das Sensorsignal erfasst, ausgewertet und als optisch im gesamten Fahrzeuginnenraum wahrnehmbares Signal in diesen weitergeleitet und ausgegeben. Das Sensormittel seinerseits ist wiederum dazu ausgebildet, mindestens eine Art eines Fahrzustandes zu überwachen, wobei unter Fahrzustand sowohl dynamische Fahrzustände des Fahrzeugs, unterschiedliche Konfigurationszustände des Fahrzeuges, Systemzustände von Fahrzeugsystemen oder auch Fahrtauglichkeitszustände des Fahrers zu verstehen sind.

Ermittelt die Steuerungseinrichtung nun anhand des Sensorsignals einen kritischen Fahrzustand, so gibt sie einen entsprechenden Steuerbefehl an die Lichtquelle aus und regelt diese entsprechend. Im Gegensatz zu mechanischen oder akustischen Wamsystemen werden optische Licht emittierende Warnsignale als weniger störend empfunden und erwecken dennoch eine sehr hohe Aufmerksamkeit bei den Fahrzeuginsassen. Hierdurch kann die Akzeptanz bei den Fahrzeuginsassen beziehungsweise Fahrern deutlich verbessert werden, wodurch die von den Fahrern häufig beobachteten Abschaltungen der Sicherheitssysteme signifikant reduziert oder überhaupt vermieden werden.

Als besonders vorteilhaft hat es sich in diesem Zusammenhang erwiesen, wenn als Lichtquelle beispielsweise Leuchtdioden, sogenannte LEDs, verwendet werden, die in ihrer Intensität besonders einfach regelbar sind, je nach Bedarf in der emittierten Wellenlänge angepasst werden können und zudem noch einen geringen Stromverbrauch aufweisen. Insbesondere LEDs mit emittierten Wellenlängen in den Bereichen von grünem, blauem, rotem und weißem Licht oder auch LED Kombinationen verschiedener Wellenlänge die in der Lage sind eine beliebige Wellenlänge im sichtbaren Spektrum zu emittieren (RGB-LED), wie beispielsweise Dreifach bzw. Triple LEDs, sind zur Verwendung im Rahmen der vorliegenden Erfindung geeignet. So kann beispielsweise mit blauem Licht auf das Vorliegen eines Ermüdungszustandes oder auch auf die Gefahr von glatten Fahrbahnen aufgrund sehr niedriger Aussentemperaturen hingewiesen werden. Andererseits können rote Licht emittierende Lichtquellen dazu verwendet werden, um beispielsweise einen Überhitzungszustand des Antriebsaggregates oder auf einen korrekten Ermüdungszustand des Fahrers hinzuweisen. Dabei kann beispielsweise ein Übermüdungszustand oder ein überhitztes Aggregat durch ein schnell blinkendes und sehr intensives rotes Lichtsignal und ein korrekter Wachzustand des Fahrers durch ein gedämpftes kontinuierliches rotes Lichtsignal angezeigt werden.

Für die Anwendung der Vorrichtung in einem Nutzfahrzeug hat es sich darüber hinaus als vorteilhaft erwiesen, wenn die Steuerungseinrichtung wenigstens zwei Teilabschnitte aufweist, wobei ein erster Teilabschnitt zur Überwachung des Fahrzustandes und zweiter Teilabschnitt zur Steuerung der Lichtquelle ausgebildet ist. Durch die bauliche und räumliche Trennung der Teilabschnitte der Steuerungseinrichtung ist es beispielsweise möglich, einen Teilabschnitt für die Steuerung der Lichtquelle vorzusehen und zur Erfassung der Sensorsignale einen oder mehrere separate Teilabschnitte zu verwenden, an unterschiedlichen Stellen im Fahrzeug angeordnet werden können. So kann etwa bei einem Austausch des Sensormittels der zur Steuerung der Lichtquelle vorgesehene Teilabschnitt beibehalten werden und nur der dem Sensormittel zugeordnete Teilabschnitt ist auszutauschen.

Bei einer besonders bevorzugten Ausführungsform der Erfindung ist darüber hinaus vorgesehen, dass als Fahrzustand die dynamische Bewegung des Fahrzeugs überwacht wird.

Hierunter sind beispielsweise Bewegungsüberwachungen zu verstehen, wie sie auch für ein elektronisches Stabilitätssystemprogramm ermittelt werden. Dieses sind beispielsweise Quer-, Längs- oder Gierbeschleunigungen um eine vertikale Drehachse, Lenkeinschläge, Drehzahlen der einzelnen Räder oder die Geschwindigkeit des Fahrzeuges. Wird nun ein kritischer Fahrzustand des Fahrzeugs aus diesen überwachten Daten ermittelt, kann ein entsprechendes Signal zur Warnung in den Fahrzeuginnenraum übertragen werden, wodurch der Fahrer in dezenter aber dennoch wirkungsvoller Weise gewarnt wird.

Bei einer anderen ganz besonders bevorzugten Ausführungsform wird als Fahrzustand eine Fahrtüchtigkeit des Fahrers überwacht. Da Übermüdungszustände zu dem als "Sekundenschlaf' bekannten Phänomenen führen, die regelmäßig für schwere Unfälle verantwortlich sind, verbessert die so ausgebildete erfindungsgemäße Vorrichtung die Fahrzeugsicherheit erheblich. So bewirken bereits geringfügige Erhöhungen der Akzeptanz derartiger Sicherheitsvorrichtungen bei den Fahrern, signifikante Verbesserungen der Sicherheit von Fahrzeugen. Insbesondere trifft dies auf Nutzfahrzeuge zu, deren Fahrer häufig sehr lange Lenkzeiten vorweisen.

Bei einer anderen vorteilhaften Weiterbildung der Erfindung ist vorgesehen, dass das Sensormittel außerhalb eines Fahrzeuginnenraumes angeordnet ist. Das Sensormittel kann beispielsweise zur Überwachung der Spurhaltung des Fahrzeuges ausgebildet sein. Dies ist etwa möglich durch ein Kamerasystem, welches das Spurfolgeverhalten des Fahrers innerhalb der Fahrspur optisch überwacht und auswertet. Ein solches System ist beispielsweise im Bereich des Vorbaus oder in Fahrbahnnähe außerhalb des Fahrzeuginnenraums angebracht. Von dort ist es dann im Weiteren über Signalleitungen mit der Steuerungseinrichtung verbunden.

Weiterhin ist es vorteilhaft, alleine oder in Kombination mit dem vorgenannten oder anderen Sensormitteln ein Sensormittel zur Erfassung wenigstens eines Bedienelementes bzw. eines Bedienvorganges auszubilden. So können etwa mittels eines solchen Sensormittels Bedienvorgänge des Fahrers überwacht werden. Hierbei sind Bedienvorgänge, wie beispielsweise Betätigungsgeschwindigkeiten, Auslenkungen der Pedalerie oder der Bedienelemente der Lenkstocksäule oder sonstiger Bedienelemente in der Instrumententafel überwachbar. Stellt man beispielsweise besondere abrupte und schnell ausgeführte Bedienvorgänge in einer Häufung fest, die über ein normales Maß hinausgehen, so kann hieraus auf einen Ermüdungszustand des Fahrers geschlossen werden.

Weiterhin kann die Zuverlässigkeit der Überwachung des Fahrzustandes verbessert werden, indem verschiedene Sensormittel miteinander kombiniert, detektiert und ausgewertet werden. Überwacht man gleichzeitig das Spur- und Fahrverhalten des Fahrers mit den Bedienvorgängen der einzelnen Bedienelemente im Fahrzeuginnenraum kann aufgrund der größeren zur Verfügung stehenden Informationsmenge eine verbesserte Aussage bezüglich der Fahrtüchtigkeit des Fahrers getroffen werden. Zusätzlich können auch optische Überwachungssysteme eingesetzt werden, welche den Fahrer beispielsweise im Gesichtsbereich, gezielt überwachen, um aufgrund der Augenbewegungen Rückschlüsse auf dessen Ermüdungszustand zu schließen.

Schließlich ist bei der erfindungsgemäßen Vorrichtung vorteilhafterweise vorgesehen, dass die Lichtquelle Licht mit einer ersten Wellenlänge und wenigstens einer zweiten Wellenlänge aussenden kann. Hierbei handelt es sich bevorzugterweise um blaues und rotes Licht. Daneben kann, je nach Art des Signals, aber auch grünes und weißes Licht zur Anwendung kommen. Durch die verschieden farbigen Wellenlängen ist es möglich unterschiedliche Signale an den Fahrer zu generieren, wobei das Signal vorzugsweise intuitiv verständlich ist. Rotes Licht kann bei besonderer Intensität etwa für große Hitze oder besondere Gefahren verwendet werden, wobei in Gefahrensituationen zusätzlich ein Blinken in sehr kurzen Zeitabständen überlagerbar ist. Andererseits kann dagegen ein rotes kontinuierliches Licht mit geringerer Intensität für einen fehler- und ermüdungsfreien Betriebszustand verwendet werden. Weiterhin ist es möglich blaues oder weißes Licht für den Hinweis auf sehr niedrige Außentemperaturen oder detektierte Ermüdungszustände des Fahrers zu verwenden. Darüber hinaus kann grünes Licht zur Quittierung von Fehlerbehebungen oder unerwünschten Fahrzuständen verwendet werden, um dem Fahrer somit anzuzeigen, dass geeignete Abstellmaßnahmen ergriffen wurden.

Das weiterhin von der Erfindung vorgeschlagene Verfahren zur Bereitstellung wenigstens eines Signals in einem Fahrzeuginnenraum, insbesondere eines Nutzfahrzeugs, bei dem Licht mittels einer gesteuerten Lichtquelle erzeugt wird, sieht erfindungsgemäß vor, dass eine zur ambienten Beleuchtung des Fahrzeuginnenraums ausgebildete Lichtquelle in Abhängigkeit von einem Fahrzustand gesteuert wird.

Weiterhin ist bei dem erfindungsgemäßen Verfahren vorteilhafterweise vorgesehen, dass die Fahrtüchtigkeit wenigstens durch Analyse der Bedienvorgänge und/oder eines Spurfolgeverhaltens bestimmt wird.

Schließlich ist gemäß dem erfindungsgemäßen Verfahren vorgesehen, dass die Lichtquelle in Abhängigkeit vom ermittelten Fahrzustand zumindest in ihrer Wellenlänge, Intensität oder Schaltfrequenz verändert wird. Unter Schaltfrequenz ist dabei das Ein- beziehungsweise Ausschalten der Lichtquelle oder das Umschalten bzw. Überblenden auf eine andere Wellenlänge zu verstehen.

Die Erfindung sowie das technische Umfeld werden nachfolgend anhand der Figuren näher erläutert. Es ist darauf hinzuweisen, dass die Figuren besonders bevorzugte Ausführungsvarianten der Erfindung zeigen, auf die sie jedoch nicht beschränkt ist. In der Zeichnung zeigt schematisch:
Fig. 1 eine schematische Seitenansicht eines erfindungsgemäßen Nutzfahrzeugs,
Fig. 2 eine zweite Ausführungsform der Erfindung in einem Nutzfahrzeuginnenraum; und
Fig. 3 eine schematische Seitenansicht einer dritten Ausführungsform der Erfindung.

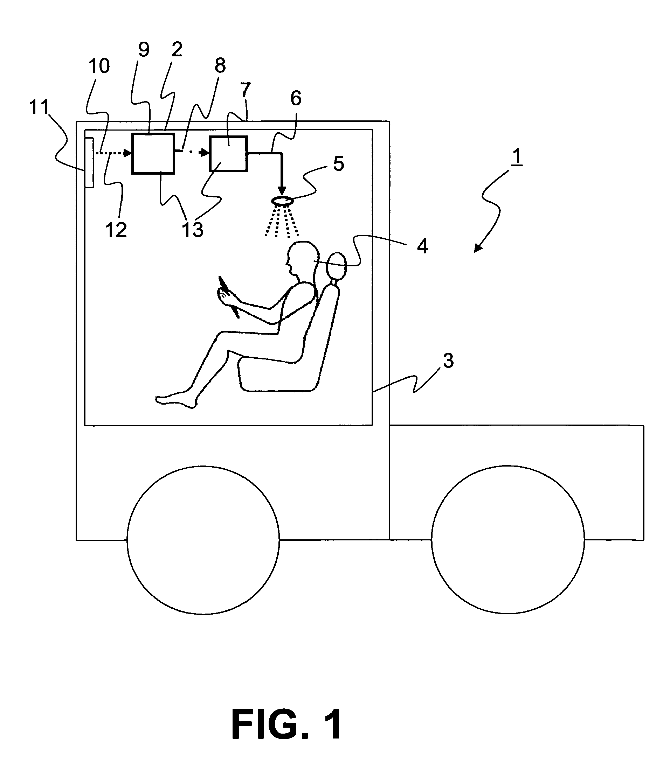

In Fig. 1 ist ein Nutzfahrzeug 1 mit einer erfindungsgemäßen Vorrichtung 2 zur Signalübertragung in einen Fahrzeuginnenraum 3 in einer seitlichen Ansicht schematisch dargestellt. Der im Fahrzeuginnenraum 3 befindliche Fahrer 4 erfährt dabei eine ambiente Beleuchtung des Fahrzeuginnenraums 3 durch eine Lichtquelle 5. Die Lichtquelle 5 ist über eine erste Leitung 6 mit einem ersten Teilabschnitt 7 verbunden. Der erste Teilabschnitt 7 ist seinerseits über eine zweite Leitung 8 mit einem zweiten Teilabschnitt 9 verbunden. Der zweite Teilabschnitt 9 ist seinerseits über eine dritte Leitung 10 mit einem Sensormittel 11, wie beispielsweise einer Kamera, verbunden. Das Sensormittel 11 erzeugt gemäß der vorliegenden Erfindung ein Sensorsignal 12, das zum zweiten Teilabschnitt 9 geleitet wird. Im zweiten Teilabschnitt 9 wird das Sensorsignal 12 ausgewertet und bestimmt in welcher Weise die Lichtquelle 5 gesteuert werden soll. Vom zweiten Teilabschnitt 9 wird dann ein Steuerbefehl an den ersten Teilabschnitt 7 weitergeleitet, der schließlich die Steuerung der Lichtquelle 5 zur Signalerzeugung im Fahrzeuginnenraum ausführt. Die Lichtquelle 5 ist bevorzugterweise durch LEDs ausgebildet, die zudem verschiedenfarbiges Licht aussenden können. Es können im Zusammenhang mit der vorliegenden Erfindung grundsätzlich auch andere bekannte Lichtquellen eingesetzt werden, sofern diese zum Einbau in ein Fahrzeug geeignet sind. Sendet nun das Sensormittel 11 ein Sensorsignal 12, welches auf einen kritischen Fahrzustand hindeutet, so bekommt der Fahrer 4 dies als Signal in den Fahrzeuginnenraum 3 übertragen. Hierbei können verschiedenartige Fahrzustände durch verschiedene Leuchtsignale im Fahrzeuginnenraum 3 angezeigt werden. Dabei wirken der erste Teilabschnitt 7 und der zweite Teilabschnitt 9 zusammen und bilden eine Steuerungseinrichtung 13.

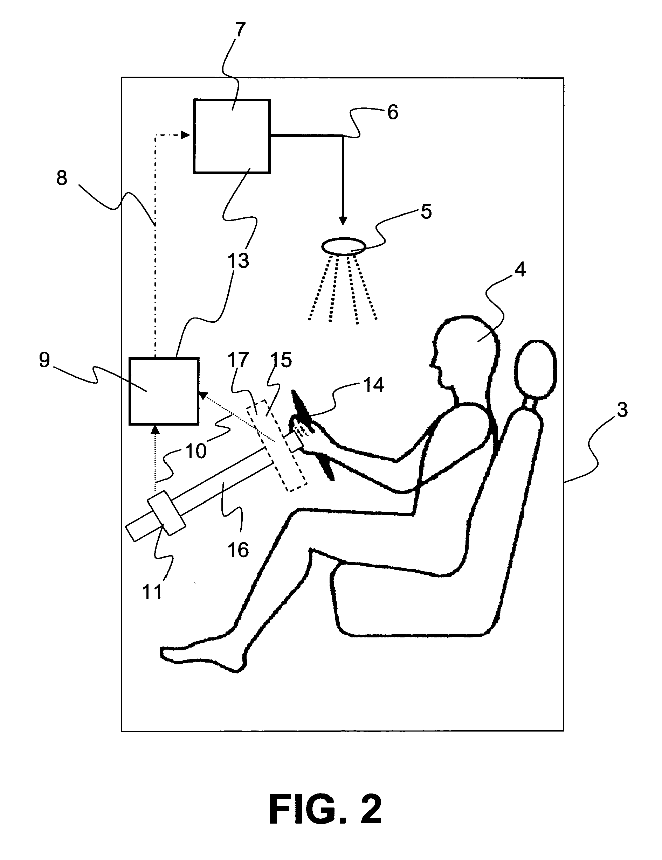

In Fig. 2 ist eine weitere Ausführungsform einer erfindungsgemäßen Vorrichtung 2 zur Signalübertragung in einen Fahrzeuginnenraum 3 in einer schematischen Seitenansicht dargestellt. Der Fahrer 4 bedient dabei ein Lenkrad 14, an dem sich Bedienelemente 15 im Bereich einer Lenksäule 16 befinden. Die Bedienelemente 15 können beispielsweise in oder um ein Kombiinstrument herum ausgebildet sein. Im weiteren Verlauf der Lenksäule 16 ist ein erstes Sensormittel 11 angeordnet, welches dazu geeignet ist die Lenkbewegungen des Fahrers 4 zu erfassen. Darüber hinaus ist am Bedienelement 15 ein zweites Sensormittel 17 vorgesehen, das zur Erfassung von Bedienvorgängen des Fahrers 4 am Bedienelemente 15 geeignet ist. Sowohl das erste Sensormittel 11 als auch das zweite Sensormittel 17 sind jeweils über dritte Signalleitungen 10 mit dem zweiten Teilabschnitt 9 der Steuerungseinrichtung 13 verbunden. Bei dieser Ausführungsform werden die Lenk- und Bedienvorgänge des Fahrers 4 von den ersten und zweiten Sensormitteln 11, 17 erfasst und die Sensorsignale 12 an den zweiten Teilabschnitt 9 weitergeleitet. Dort werden die Sensorsignale 12 ausgewertet und als Steuerbefehle an den ersten Teilabschnitt 7 über die zweite Leitung 8 weitergeleitet. Von dort aus wird wiederum die Steuerung der Lichtquelle 5 in der gewünschten Weise veranlasst.

An dieser Stelle ist darauf hinzuweisen, dass die Lichtquelle 5 als ambiente Lichtquelle ausgebildet ist. Sie ist somit nicht Bestandteil der in einem Fahrzeug vorhandenen Instrumentenbeleuchtung oder der Beleuchtung von Bedienelementen. Vielmehr ist die Lichtquelle 5 dazu geeignet zwei- oder dreidimensionale Bereiche des Fahrzeuginnenraums 3 zu beleuchten, welche von der Instrumentenbeleuchtung oder der Beleuchtung der Bedienelemente nicht erfasst wird. Hierdurch können wesentlich größere Bereiche zur Darstellung und Übertragung des gewünschten Signals genutzt werden, wodurch die Aufmerksamkeit und Wahrnehmung des Fahrers signifikant verbessert wird. Ungeachtet dessen ist es aber jederzeit möglich auch die bekannte Instrumentenbeleuchtung und Beleuchtung von Bedienelementen im Rahmen der Ansteuerung der Lichtquelle 5 mit einzubeziehen und entsprechend das von diesen Lichtquellen emittierte Licht erfindungsgemäß zu steuern.

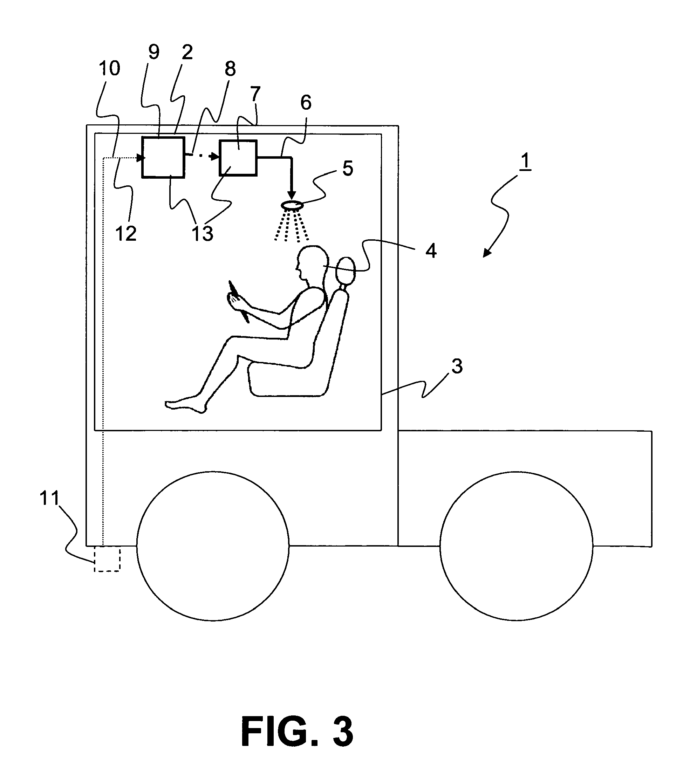

In Fig. 3 ist schließlich eine dritte Ausführungsform einer erfindungsgemäßen Vorrichtung zur Signalübertragung dargestellt, wobei das Nutzfahrzeug 1 wiederum in einer Seitenansicht schematisch dargestellt ist. Der erste Teilabschnitt 7 und der zweite Teilabschnitt 9 bilden zusammen wiederum die Steuerungseinrichtung 13. Bei dieser Ausführungsform ist jedoch das Sensormittel 11 außerhalb des Fahrzeuginnenraums 3 angeordnet und das Sensorsignal 12 wird über die dritte Leitung 10 zum zweiten Teilabschnitt 9 übertragen. Das Sensormittel 11 gemäß dieser Ausführungsform ist dazu geeignet, dass Spurfolgeverhalten des Nutzfahrzeugs 1 zu überwachen. Dazu kann das Sensormittel 11 beispielsweise ein im Frontbereich in Fahrbahnnähe angeordnetes Kamerasystem umfassen, um das Überfahren von Seitenlinien zu erfassen. Tritt ein solcher Fall auf kann, wie bereits zuvor beschrieben, ein entsprechendes Warnsignal über die Lichtquelle 5 als ambientes Lichtsignal an den Fahrer 4 ausgegeben werden. Alternativ kann das Sensormittel 11 auch als Temperatursensor, Abstandssenor oder als eine Kombination verschiedener Sensoren ausgebildet sein.

Die vorliegende Erfindung ist nicht auf die dargestellten Ausführungsbeispiele beschränkt. Vielmehr sind im Rahmen der Patentansprüche zahlreiche Abwandlungen der Erfindungen möglich so können beispielsweise anstelle der beschriebenen Sensormittel auch Kombinationen von Sensormitteln zur Anwendung kommen und durch entsprechende Auswertung der Sensorsignale 12 die Zuverlässigkeit der Erfassung von Fahrzuständen verbessert werden. Insbesondere eine Kombination von den in den Fig. 2 und 3 angezeigten Sensormitteln kann zu einer solchen Verbesserung verwendet werden, da hierdurch etwa sehr abrupte Lenk- oder Bedienbewegungen bei einem Verlassen der Fahrspur sehr zuverlässig erfasst werden können, was als zuverlässiges Indiz für eine Übermüdung des Fahrers herangezogen werden kann.

### Bezugszeichenliste

- 1: Nutzfahrzeug
- 2: Vorrichtung
- 3: Fahrzeuginnenraum
- 4: Fahrer
- 5: Lichtquelle
- 6: erste Leitung
- 7: erster Teilabschnitt
- 8: zweite Leitung
- 9: zweiter Teilabschnitt
- 10: dritte Leitung
- 11: Sensormittel
- 12: Sensorsignal
- 13: Steuerungseinrichtung
- 14: Lenkrad
- 15: Bedienelement
- 16: Lenksäule
- 17: zweites Sensormittel

## Patentansprüche

1. Vorrichtung (2) zur Signalübertragung in einen Fahrzeuginnenraum (3), insbesondere eines Nutzfahrzeuges (1), mit wenigstens einer in dem Fahrzeuginnenraum (1) angeordneten Lichtquelle (5), die steuerungstechnisch mit einer Steuerungsvorrichtung (13) verbunden ist, **dadurch gekennzeichnet, dass** die Lichtquelle (13) zur ambienten Beleuchtung ausgebildet ist, wobei die Steuerungseinrichtung (13) zur Überwachung mindestens einer Art eines Fahrzustandes eingerichtet und mit wenigstens einem Sensormittel (11) verbunden ist, welches ein Sensorsignal (12) erzeugt und die Lichtquelle in Abhängigkeit von dem Sensorsignal (12) steuert.

2. Vorrichtung (2) nach dem vorhergehenden Anspruch, **dadurch gekennzeichnet, dass** die Steuerungseinrichtung (13) wenigstens zwei Teilabschnitte (7, 9) aufweist, wobei ein erster Teilabschnitt (9) zur Überwachung des Fahrzustandes und ein zweiter Teilabschnitt (7) zur Steuerung der Lichtquelle (5) ausgebildet ist.

3. Vorrichtung (2) nach einem der vorhergehenden Ansprüche, **dadurch gekennzeichnet, dass** als Fahrzustand die dynamische Bewegung eines Fahrzeuges überwacht wird.

4. Vorrichtung (2) nach einem der vorhergehenden Ansprüche, **dadurch gekennzeichnet, dass** als Fahrzustand eine Fahrtüchtigkeit eines Fahrers überwacht wird.

5. Vorrichtung (2) nach einem der vorhergehenden Ansprüche, **dadurch gekennzeichnet, dass** das Sensormittel (11) außerhalb des Fahrzeuginnenraumes (3) angeordnet ist.

6. Vorrichtung (2) nach einem der vorhergehenden Ansprüche, **dadurch gekennzeichnet, dass** das Sensormittel (11) zur Überwachung wenigstens eines Bedienelementes (15) ausgebildet ist.

7. Vorrichtung (2) nach einem der vorhergehenden Ansprüche, **dadurch gekennzeichnet, dass** die Lichtquelle (5) Licht mit einer ersten Wellenlänge und wenigstens einer zweiten Wellenlänge aussenden kann.

8. Verfahren zur Bereitstellung wenigstens eines Signals in einem Fahrzeuginnenraum (3), insbesondere eines Nutzfahrzeuges (1), wobei Licht mittels einer gesteuerten Lichtquelle (5) erzeugt wird, **dadurch gekennzeichnet, dass** eine zur ambienten Beleuchtung des Fahrzeuginnenraums (3) ausgebildete Lichtquelle (5) in Abhängigkeit von einem Fahrzustand gesteuert wird.

9. Verfahren nach einem der vorhergehenden Ansprüche, **dadurch gekennzeichnet, dass** die Fahrtüchtigkeit wenigstens durch Überwachung eines Bedienelementes (15) bestimmt wird.

10. Verfahren nach einem der vorhergehenden Ansprüche, **dadurch gekennzeichnet, dass** das die Fahrtüchtigkeit wenigstens durch Analyse eines Spurfolgeverhaltens bestimmt wird.

11. Verfahren nach einem der vorhergehenden Ansprüche, **dadurch gekennzeichnet, dass** die Lichtquelle (5) in Abhängigkeit vom ermittelten Fahrzustand zumindest in ihrer Wellenlänge, Intensität oder Schaltfrequenz verändert wird.
